# EUROPÄISCHE PATENTSCHRIFT

(11) **EP 2 343 243 B1**
(45) Veröffentlichungstag und Bekanntmachung des Hinweises auf die Patenterteilung: **13.06.2012**
(21) Anmeldenummer: 10150277.1
(22) Anmeldetag: 07.01.2010
(51) Int. Cl.: B65B 5/10, B65B 11/52, B65B 57/00, A61J 1/03, A61J 7/00, G01G 9/00, G01N 27/22

(54) **Anlage zur überwachten Abfüllung fester pharmazeutischer Produkte**
Assembly for monitored filling of solid pharmaceutical products
Installation destinée au remplissage controlé de produits pharmaceutiques solides

(43) Veröffentlichungstag der Anmeldung: 13.07.2011
(73) Patentinhaber: Uhlmann VisioTec GmbH, 88471 Laupheim (DE)
(72) Erfinder: Mertens, Richard, 88471 Laupheim (DE); Prinz, Heino, 88471 Laupheim (DE)
(74) Vertreter: Wächter, Jochen

(56) Entgegenhaltungen:
- EP-A1- 1 988 019
- EP-A1- 2 030 895
- EP-A1- 2 062 822
- WO-A1-2008/098340
- DE-A1-102004 020 510
- US-A- 4 461 363
- US-A- 5 638 657

## Beschreibung

Die Erfindung betrifft eine Anlage zur überwachten Abfüllung fester pharmazeutischer Produkte in Blisternäpfe einer Blisterverpackung, insbesondere zur Herstellung einer Mehrtagesverpackung, die unterschiedliche pharmazeutische Produkte enthält.

Herkömmliche Blisterverpackungen sind auf die Aufnahme eines einzigen Medikaments in mehreren Blisternäpfen ausgerichtet. Bei der Behandlung chronisch kranker Menschen lässt jedoch oftmals die konsequente therapiegetreue Einnahme von Medikamenten zu wünschen übrig. Dies ist insbesondere dann der Fall, wenn mehrmals täglich verschiedene Tabletten eingenommen werden müssen. Um einerseits eine Erinnerungshilfe zur Einnahme der Medikamente zu schaffen und andererseits einen zuverlässigen Überblick zu gewähren, welche Medikamente bereits eingenommen sind, ist in der DE 10 2004 034 024 A1 eine Blisterverpackung beschrieben, in der die Arzneimittelnäpfe in einer nach Wochentagen und Einnahmezeiten unterteilten Matrix mit sieben Zeilen und mindestens drei, üblicherweise vier Spalten angeordnet sind. Die einzelnen Arzneimittelnäpfe sind dabei als wannenförmige Vertiefungen einer dünnen Kunststoffschicht ausgebildet, und alle Tabletten, die für einen Einnahmezeitpunkt vorgesehen sind, sind gemeinsam in einer solchen Vertiefung aufgenommen. Alle Arzneimittelnäpfe sind mit einer Blisterfolie abgedeckt und die Abschnitte für die einzelnen Einnahmezeitpunkte sind jeweils mittels einer Perforation voneinander getrennt, sodass eine einfache Separierung einzelner Einnahmeabschnitte für bestimmte Tageszeiten und bestimmte Wochentage möglich ist.

Zur Herstellung derartiger Verpackungseinheiten für den wöchentlichen Medikamentenbedarf eines Patienten sind verschiedene Verfahren bekannt. In DE 10 2004 020 510 A1 werden beispielsweise streifenförmige, zu Rollen aufgewickelte Vorratsbüsterverpackungen, welche die einzelnen Medikamente beinhalten, an verschiedenen Füllstationen über der oben beschriebenen Verpackungseinheit in Querrichtung bewegt und mittels Stößeln aus der streifenförmigen Blisterverpackung in die wannenförmigen Vertiefungen der Verpackungseinheit gedrückt, bevor die als Wochenblister ausgebildete Verpackungseinheit integral mit einer Versiegelungsfolie versiegelt wird. Weitere Herstellungsverfahren für derartige Mehrtagesverpackungen mit verschiedenen Medikamenten sind aus EP 1 988 019 B1 EP 2 000 410 B1 und EP 2 062 822 A1 bekannt.

Bei den vier zuletzt genannten Verfahren zur Herstellung einer Mehrtagesverpackung mit verschiedenen Medikamenten ist jeweils eine Transporteinrichtung vorgesehen, mittels derer die Mehrtagesblisterverpackungen sequentiell zu den verschiedenen Füllstationen transportiert werden. Diese Transporteinrichtung kann beispielsweise als Förderband realisiert sein, oder es können Transportplatinen für die Blisterverpackungen vorgesehen sein, welche über direkt mit ihnen verbundene Zieh- oder Schubeinrichtungen bewegt werden können.

Zur Überprüfung des Befüllvorgangs an den einzelnen Füllstationen ist in EP 1 988 019 B1 und EP 2 000 410 B1 eine Kamera im Bereich jeder Füllstation angeordnet. Allerdings kann mit einer solchen Kamera lediglich der Befüllvorgang als solches überwacht werden, während eine Endkontrolle der in die Blisternäpfe abgelegten Tabletten kaum möglich ist, da sich die verschiedenen Tabletten in einem Blisternapf teilweise überdecken bzw. verschiedene Orientierung aufweisen und somit keine eindeutige Erkennung möglich ist.

Aus der EP 2 030 895 A1 sind kapazitive Sensoren zum Messen der Masse von Tabletten bekannt. Diese sind im oberen Randbereich der Fallstrecke der Tabletten angeordnet und messen die Änderungen des elektrischen Feldes beim Durchtritt der Tablette zwischen den beiden Kondensatoren des Sensors. Aus dieser Änderung kann anschließend die Masse der Tablette berechnet werden.

Der vorliegenden Erfindung liegt die Aufgabe zugrunde, eine Anlage zur überwachten Abfüllung fester pharmazeutischer Produkte in Blisternäpfe einer Blisterverpackung zu schaffen, die auch bei Befüllung eines Blisternapfes mit mehreren unterschiedlichen pharmazeutischen Produkten eine 100%-Füllkontrolle jedes einzelnen Blisternapfes gewährleistet und gleichzeitig eine hohe Frequenz bei der Herstellung der Blisterverpackungen gewährleistet.

Diese Aufgabe wird durch die Merkmale des Anspruchs 1 gelöst.

Erfindungsgemäß weist die Anlage zur überwachten Abfüllung fester pharmazeutischer Produkte in Blisternäpfe einer Blisterverpackung eine Mehrzahl von Füllvorrichtungen zur Befüllung der Blisternäpfe mit festen pharmazeutischen Produkten auf, sowie mindestens ein zwischen den Füllvorrichtungen bewegbares Transportelement, das einen Lagerungsabschnitt zur Lagerung der Blisterverpackung aufweist. Dabei weist das Transportelement im Bereich des Lagerungsabschnitts mehrere kapazitive Sensoren zur Bestimmung der Masse der in jedem Blisternapf enthaltenen pharmazeutischen Produkte auf, wobei jeder kapazitive Sensor eine erste Elektrode und eine zweite Elektrode aufweist. Diese werden durch einen Spannungsgenerator für ein hochfrequentes elektrisches Wechselfeld jeweils kurzzeitig entgegengesetzt aufgeladen, und ein Strommessgerät misst die durch die pharmazeutischen Produkte in jedem Blisternapf induzierten Stromschwankungen. Auf diese Weise können Masseänderungen in jedem Blisternapf einzeln nachgewiesen werden.

Für eine sichere und genaue Messung ist die erste Elektrode und die zweite Elektrode jedes Sensors in einem Bodenbereich des Lagerungsabschnitts des Transportelements angeordnet.

Durch eine Integration kapazitiver Sensoren in das Transportelement wird für jeden Blisternapf separat eine Massenkontrolle möglich, und zwar unabhängig von der Befüllung der übrigen Blisternäpfe. Auf diese Weise kann an jeder Füllvorrichtung das Befüllungsergebnis in kürzester Zeit kontrolliert und ausgewertet werden.

Vorzugsweise ist das Transportelement als Wagen oder Schlitten ausgebildet. Auf diese Weise ist ein besonders schneller und eleganter Transport der Blisterverpackung zu den einzelnen Füllvorrichtungen möglich. Außerdem ist auf diese Weise eine Bewegung des Transportelements in verschiedene Richtungen möglich, was die Flexibilität der Anlage erhöht.

Eine besonders einfache Führung des Transportelements wird gewährleistet, indem es auf Schienen verfahrbar ist.

Im Sinne eines reibungslosen Ablaufs der Befüllung sind das Transportelement und die Füllvorrichtungen über eine zentrale Steuerungsvorrichtung betätigbar. Hierdurch wird die Synchronität zwischen der Bewegung der Transportelemente und der Aktivierung der jeweiligen Füllvorrichtung erreicht.

Als zusätzliche Überwachungsmaßnahme kann im Bereich jeder Füllvorrichtung eine Kamera zur Überprüfung des Befüllvorgangs der Blisternäpfe angeordnet sein.

Für eine optimale Messung hat das elektrische Wechselfeld eine Frequenz von zwischen 500 kHz und 10 MHz, vorzugsweise zwischen 1 MHz und 2 MHz.

Im Sinne eines hohen Durchsatzes ist jeder Sensor geeignet, die Daten eines Blisternapfes innerhalb eines Zeitfensters von weniger als 100 ms, bevorzugt weniger als 50 ms, mehr bevorzugt weniger als 10 ms, aufzunehmen.

Es ist vorteilhaft, wenn die erste Elektrode jedes Sensors von einer Isolierung und anschließend von der zweiten Elektrode des jeweiligen Sensors eingegrenzt ist. So erhält man ein Messfeld mit gebogenen Feldlinien, welche das gesamte Volumen eines Blisternapfes abdecken.

In einer besonders vorteilhaften Konfiguration weist die erste Elektrode einen runden Querschnitt und die zweite Elektrode einen ringförmigen Querschnitt auf.

In einer alternativen Ausgestaltung weist die erste Elektrode einen rechteckigen Querschnitt und die zweite Elektrode einen Querschnitt in Form einer eckigen Umrandung auf.

Weitere Eigenschaften und Vorteile der vorliegenden Erfindung ergeben sich aus der nachfolgenden Beschreibung unter Bezugnahme auf die Zeichnungen.
- Fig. 1: ist eine schematische Draufsicht auf eine Anlage zur überwachten Abfüllung fes- ter pharmazeutischer Produkte in Blisternäpfe einer Blisterverpackung mit einer Mehrzahl von Füllvorrichtungen;
- Fig. 2: ist eine Perspektivansicht einer Füllvorrichtung der Anlage aus Fig. 1, wobei ein Transportelement mit einer noch leeren Blisterverpackung im Bereich der Füllvor- richtung angeordnet ist;
- Fig. 3: ist eine Perspektivansicht der Füllvorrichtung aus Fig. 2 während der Befüllung;
- Fig. 4: ist eine Perspektivansicht der Füllvorrichtung aus Fig. 2, wobei ein nächstes Transportelement im Bereich der Füllvorrichtung angeordnet ist;
- Fig. 5: ist eine schematische Draufsicht auf eine Blisterverpackung, welche im Lage- rungsabschnitt eines Transportelements aufgenommen ist;
- Fig. 6: ist ein Querschnitt eines Transportelements mit darauf gelagerter Blisterverpa- ckung; und
- Fig. 7: ist eine Draufsicht auf eine beispielhafte Anordnung von erster Elektrode und zweiter Elektrode des kapazitiven Sensors.

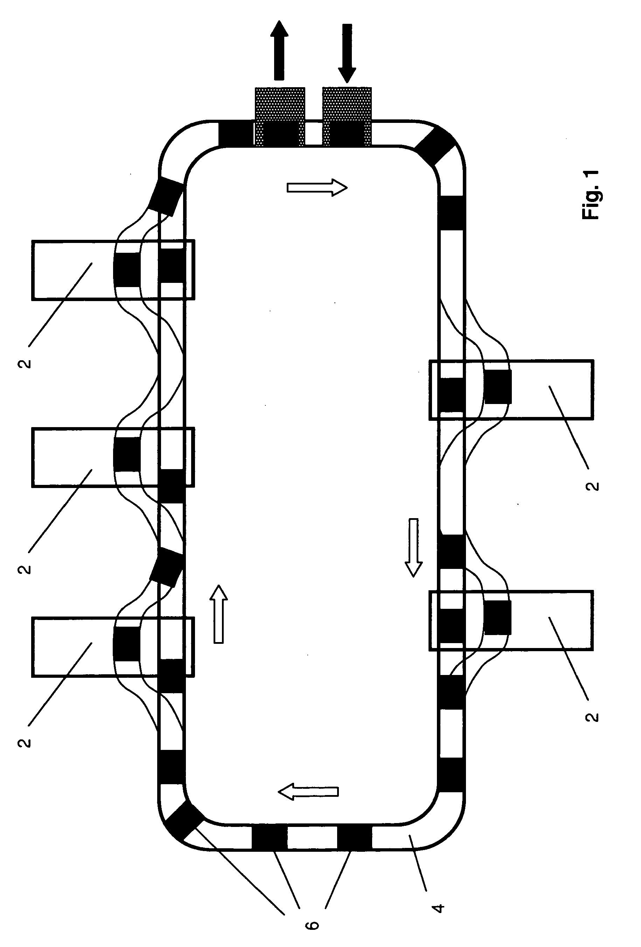

In Fig. 1 ist schematisch eine Ausführungsform einer erfindungsgemäßen Anlage zur überwachten Abfüllung fester pharmazeutischer Produkte in Blisternäpfe einer Blisterverpackung dargestellt. Die Anlage umfasst eine Vielzahl von Füllvorrichtungen 2, von der eine jede vorzugsweise zur Befüllung mit einem anderen festen pharmazeutischen Produkt dient. Als festes pharmazeutisches Produkt wird hier eine Tablette, ein Dragee, eine Kapsel oder dergleichen bezeichnet. Es ist ebenfalls denkbar, an jeder Füllvorrichtung 2 mehrere unterschiedliche pharmazeutische Produkte zur Befüllung bereitzustellen.

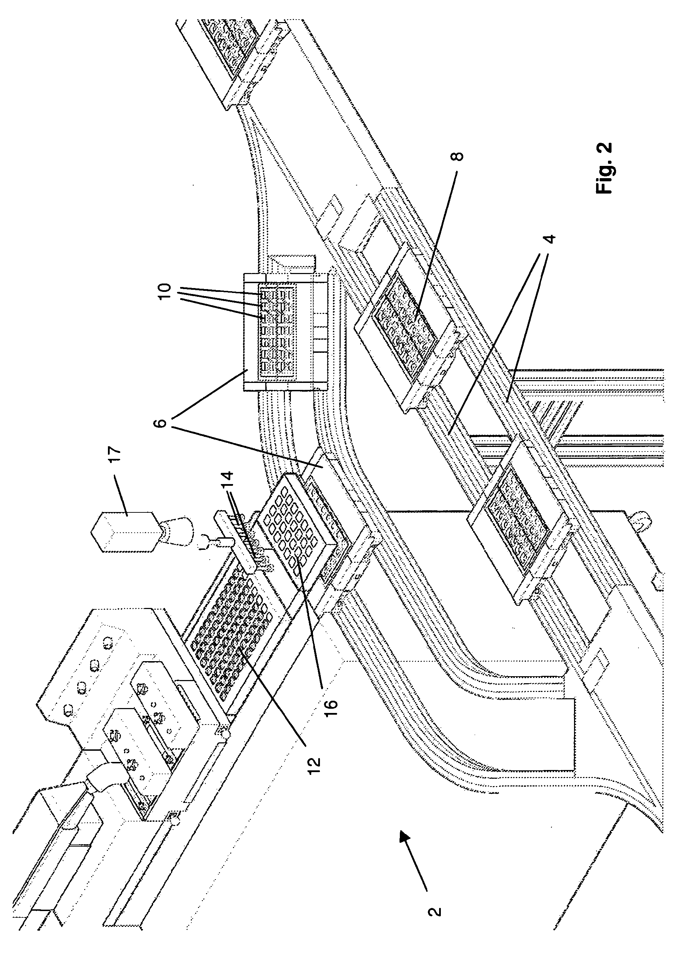

Im dargestellten Beispielsfall sind die Füllvorrichtungen 2 über Schienen 4 miteinander verbunden, welche zur Führung von mindestens einem Transportelement 6 dienen. Jedes Transportelement 6 ist darauf ausgerichtet, eine Blisterverpackung 8 (siehe Fig. 2) aufzunehmen und zur Befüllung der Blisternäpfe 10 der Blisterverpackung 8 den jeweiligen Füllvorrichtungen 2 zuzuführen. Beim Durchlauf durch die Anlage werden jeder Blisterverpackung 8 an vorbestimmten Füllvorrichtungen 2 jeweils pharmazeutische Produkte einer vorbestimmten Sorte in ausgesuchte Blisternäpfe 10 zugeführt. Die Befüllung erfolgt hierbei gemäß einem vorbestimmten Medikamentenplan.

In Fig. 2 ist das Transportelement 6 als Wagen oder Schlitten ausgebildet und auf den Schienen 4 verfahrbar. Ebenso ist es im Rahmen der Erfindung jedoch denkbar, als Transportelemente 6 anderweitig bewegte Elemente vorzusehen, beispielsweise auf Rollen verfahrbare Wagen, einzelne Abschnitte eines Förderbandes oder dergleichen. In einer Ausführungsform erfolgt die Bewegung des mindestens einen Transportelements 6 automatisch und gesteuert durch eine zentrale Steuervorrichtung (nicht dargestellt).

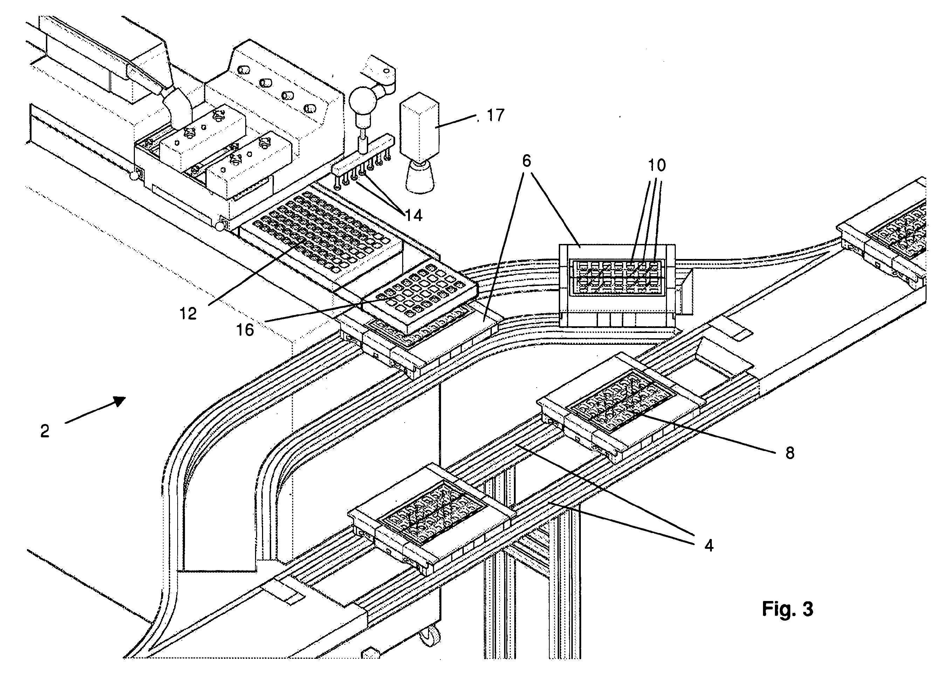

In Fig. 3 ist ein Beispiel einer Füllvorrichtung 2 im Detail dargestellt. Das Transportelement 6, welches sich unmittelbar im Bereich der Füllvorrichtung 2 befindet, ist zur Befüllung vorgesehen, während andere Transportelemente 6, welche mit den an dieser speziellen Füllvorrichtung 2 bereitgestellten Medikamenten nicht befüllt werden sollen, an der Füllvorrichtung 2 vorbeigeleitet werden. Hierzu ist in den Schienen 4 eine Weiche vorgesehen, welche die zur Befüllung vorgesehenen Transportelemente 6 aus der geradlinigen Strecke auskoppelt und zur Füllvorrichtung 2 ableitet. Ebenso ist es möglich, lediglich eine Schienenstrecke vorzusehen.

Die Ausgestaltung der Füllvorrichtung 2 ist für den Fachmann beliebig wählbar, siehe beispielsweise die in DE 10 2004 020 510 A1, EP 1 988 019 B1 oder EP 2 000 410 B1 beschriebenen Füllvorrichtungen und Befüllverfahren. Im dargestellten Beispielsfall ist eine mit pharmazeutischen Produkten gefüllte Vorratsplatte 12 vorgesehen, aus deren Vertiefungen die gewünschte Anzahl von pharmazeutischen Produkten mittels mehrerer einzeln angesteuerter Sauggreifer 14 entnommen wird. Die Sauggreifer 14 legen die pharmazeutischen Produkte in Aufnahmen einer Zwischenplatte 16 ab, von wo aus durch Öffnen von Bodenplatten (nicht dargestellt) die pharmazeutischen Produkte in die darunter angeordneten Blisternäpfe 10 der Blisterverpackung 8 abgegeben werden. Ebenso ist es denkbar, dass die Sauggreifer 14 die pharmazeutischen Produkte direkt in die Blisternäpfe 10 der Blisterverpackung 8 ablegen. Wie schon erwähnt, ist auch jede andere Form der Befüllung der Blisternäpfe 10 mit pharmazeutischen Produkten im Rahmen der vorliegenden Erfindung anwendbar.

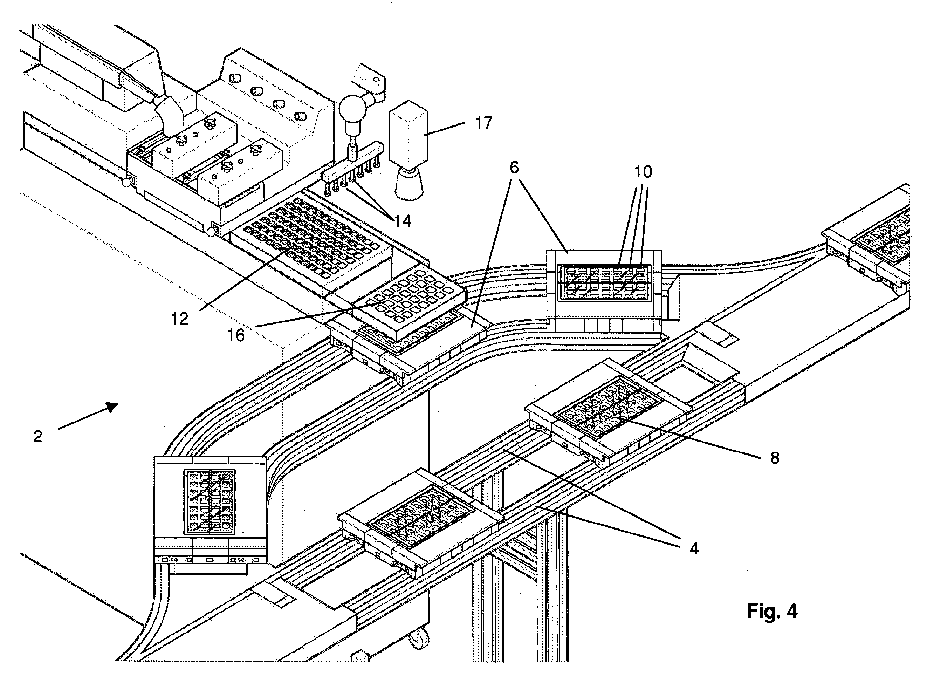

In Fig. 4 ist die Zwischenplatte 16 im leeren Zustand dargestellt, während in Fig. 3 die beiden äußeren Reihen der Zwischenplatte 16 mit pharmazeutischen Produkten befüllt sind. Nach Befüllung der jeweils zuvor ausgewählten Blisternäpfe 10 der Blisterverpackung 8 wird das Transportelement 6, auf welchem die nun teilweise befüllte Blisterverpackung 8 gelagert ist, wieder auf den Schienen 4 weiterbewegt und steuert die nächste für sie vorgesehene Füllvorrichtung 2 an. Gleichzeitig ist die Füllvorrichtung 2 wieder für ein neues Transportelement 6 zugänglich (Fig. 4).

Zur Überwachung kann im Bereich jeder Füllvorrichtung 2 eine Kamera 17, vorzugsweise eine Farbkamera, zur Überprüfung des Befüllvorgangs angeordnet sein.

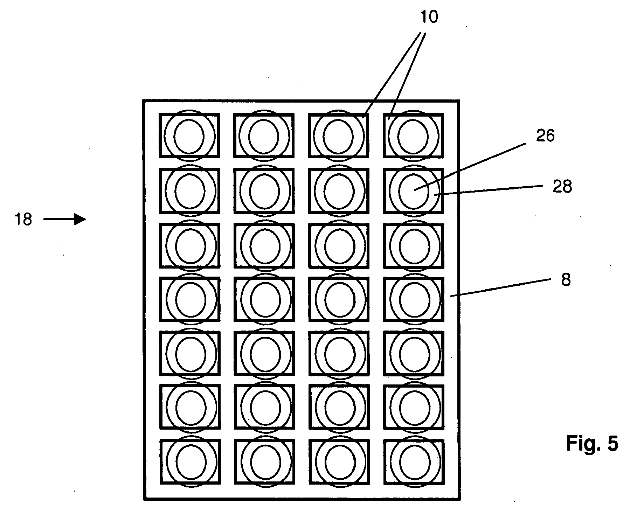

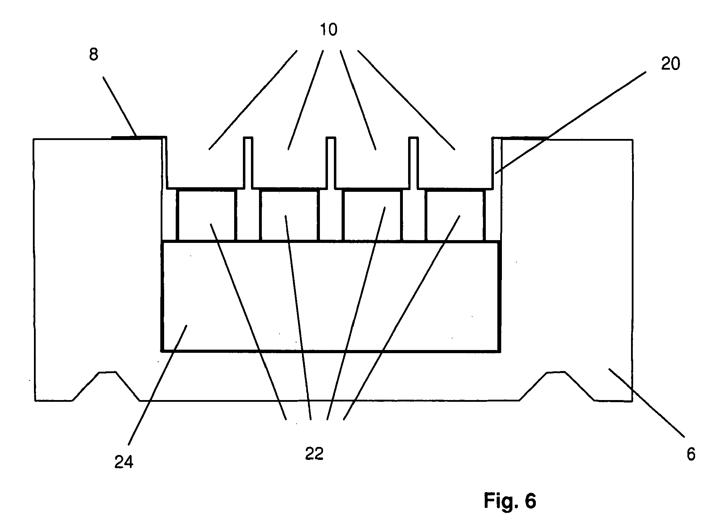

In Fig. 5 ist ein Beispiel einer Blisterverpackung 8 mit darunter liegendem Lagerungsabschnitt 18 des Transportelements 6 dargestellt. Fig. 6 zeigt einen Querschnitt durch ein als Wagen oder Schlitten ausgebildetes Transportelement 6 mit darauf gelagerter Blisterverpackung 8. Der Lagerungsabschnitt 18 umfasst dabei denjenigen Teil des Transportelements 6, der den Abmessungen der Blisterverpackung 8 entspricht und auf dem die Blisterverpackung 8 gelagert ist. Der Lagerungsabschnitt 18 kann eine beliebige Form aufweisen, beispielsweise kann er als ebene Fläche ausgebildet sein, auf der die Blisternäpfe 10 der Blisterverpackung 8 aufliegen. In einer bevorzugten Ausführungsform, wie in Fig. 6 dargestellt, ist der Lagerungsabschnitt 18 des Transportelements 6 der Form der Blisterverpackung 8 angepasst, besitzt also im Bereich der Blisternäpfe 10 eine entsprechende Ausnehmung 20. Im Bereich des Lagerungsabschnitts 18 sind erfindungsgemäß mehrere Sensoren 22 angeordnet, die als kapazitive Sensoren ausgebildet sind und zur Bestimmung der Masse der pharmazeutischen Produkte dienen, welche sich in jedem einzelnen Blisternapf 10 befinden. Für die exakte Anordnung der Sensoren 22 gibt es eine Vielzahl von Möglichkeiten, jedoch ist erfindungsgemäß bevorzugt, wenn ein Sensor 22 pro Blisternapf 10 vorgesehen ist und jeder Sensor 22 im Bodenbereich des Lagerungsabschnitts 18, also unter dem zugehörigen Blisternapf 10 angeordnet ist. Idealerweise liegen die Blisternäpfe 10 direkt auf den Sensoren 22 auf. Es ist außerdem bevorzugt, wenn die Sensorelektronik 24 ebenfalls in das Transportelement 6 integriert ist.

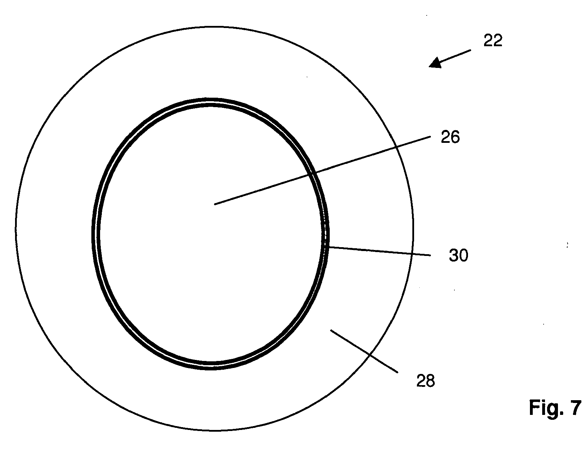

In Fig. 7 ist eine bevorzugte Ausgestaltung eines Sensors 22 in Draufsicht dargestellt. Der Sensor 22 umfasst eine erste Elektrode 26, welche einen runden Querschnitt aufweist. Die erste Elektrode 26 ist von einer zweiten Elektrode 28 umgeben bzw. eingegrenzt, die einen ringförmigen Querschnitt aufweist. Zwischen der ersten Elektrode 26 und der zweiten Elektrode 28 ist eine Isolierung 30 angeordnet. Es sind auch alle möglichen anderen geometrischen Formen des Sensors 22 denkbar. Insbesondere kann die erste Elektrode 26 einen rechteckigen Querschnitt und die zweite Elektrode 28 einen Querschnitt in Form einer eckigen Umrandung aufweisen.

Die erste Elektrode 26 und die zweite Elektrode 28 werden beim Einsatz durch einen Spannungsgenerator (nicht dargestellt) für ein hochfrequentes elektrisches Wechselfeld jeweils kurzzeitig entgegengesetzt aufgeladen. Hierdurch entstehen gebogene Feldlinien, die in den Blisternapf 10 ragen. Die Frequenz beträgt zwischen 500 kHz und 10 MHz, vorzugsweise zwischen 1 MHz und 2 MHz. Durch die Änderung der angelegten Spannung ergeben sich minimale Polarisationsänderungen in den an sich Isolatoren darstellenden pharmazeutischen Produkten im elektrischen Wechselfeld. Diese minimalen Polarisationsänderungen können durch ein Strommessgerät (nicht dargestellt) aufgenommen werden. Der gemessene Strom ist proportional zur Anzahl der polarisierten Teilchen in den pharmazeutischen Produkten. Die Messung kann innerhalb kurzer Zeit erfolgen. In einer bevorzugten Ausführungsform ist jeder Sensor 22 geeignet, die Daten eines Blisternapfes 10 innerhalb eines Zeitfensters von weniger als 100 ms, bevorzugt weniger als 50 ms, mehr bevorzugt weniger als 10 ms, aufzunehmen. Mit diesen Sensoren ist es möglich, auch die Hinzufügung einer Tablettensorte zu anderen, bereits im Blisternapf 10 befindlichen pharmazeutischen Produkten, sicher festzustellen.

Die Funktionsweise der erfindungsgemäßen Anlage zur Abfüllung fester pharmazeutischer Produkte in Blisternäpfe 10 einer Blisterverpackung 8 wird im Folgenden detaillierter beschrieben. Über die zentrale Systemsteuerung werden, vorzugsweise patientenbezogen, Aufträge zum Befüllen bestimmter Blisternäpfe 10 mit bestimmten pharmazeutischen Produkten generiert. Dabei wird beispielsweise der Wochenvorrat an Medikamenten in den Blisternäpfen 10 hinterlegt, wobei jeder Blisternapf 10 einem Einnahmezeitpunkt entspricht. Dabei ist es üblich, in einem Blisternapf 10 verschiedene pharmazeutische Produkte abzulegen. In einer bevorzugten Ausführungsform wird jedem intelligenten Transportelement 6 ein Patientenauftrag übergeben. Hierbei werden Zahl und Art der pharmazeutischen Produkte sowie die Position der entsprechenden Füllvorrichtungen 2 in der Anlage übermittelt. Alternativ kann das System auch zentral gesteuert werden. Solange das Transportelement 6 unterwegs zur ersten Füllvorrichtung 2 ist oder wenn es gerade dort angekommen ist, gleicht sich jeder Sensor 22 auf eine virtuelle Nullposition ab, wobei Material und Umgebungsbedingungen berücksichtigt werden. Die Sensorelektronik 24 weist vorzugsweise eine Kommunikationsschnittstelle auf, die immer dann benutzt wird, wenn das Transportelement 6 an einer Füllvorrichtung 2 angedockt ist. Dies kann drahtlos oder drahtgebunden erfolgen. Sobald das Transportelement 6 an der Füllvorrichtung 2 angedockt ist, wird die Verbindung zum übergeordneten System hergestellt. Dann werden die an dieser Füllvorrichtung 2 vorrätigen pharmazeutischen Produkte in die gewünschten Blisternäpfe 10 der Mehrtages-Blisterverpackung 8 eingeführt, und der Sensor misst am Ende des Füllvorgangs die Änderung des Signals und ermittelt hieraus die zugehörige Masseänderung anhand einer vordefinierten Kalibrierungsgeraden. Das Ende des Füllvorgangs wird wiederum vom übergeordneten System signalisiert. Daraufhin übermittelt der Sensor 22 seine ermittelten Ergebnisse pro Blisternapf 10. Da hierbei die jeweilige absolute Masseänderung übermittelt wird und das übergeordnete System die Einzelmassen der pharmazeutischen Produkte kennt, kann über eine Plausibilitätsrechnung ermittelt werden, ob alle zuzuführenden pharmazeutischen Produkte den jeweiligen richtigen Blisternapf 10 erreicht haben, oder ob diese auf dem Übergabeweg verloren gingen. Dadurch kann sichergestellt werden, dass der Patient auf jeden Fall die richtige Anzahl von Medikamenten bekommt. In der Kombination mit den Kameras 17 an den Füllvorrichtungen 2, die jeweils die Produktidentität prüfen, kann eine vollständige Sicherheit bei der Herstellung der patientenbezogenen Mehrtages-Blisterverpackung 8 erreicht werden.

## Patentansprüche

1. Anlage zur überwachten Abfüllung fester pharmazeutischer Produkte in Blisternäpfe (10) einer Blisterverpackung (8), mit
einer Mehrzahl von Füllvorrichtungen (2) zur Befüllung der Blisternäpfe (10) mit festen pharmazeutischen Produkten;
mindestens einem zwischen den Füllvorrichtungen (2) bewegbaren Transportelement (6), das einen Lagerungsabschnitt (18) zur Lagerung der Blisterverpackung (8) aufweist,
**dadurch gekennzeichnet, dass**
das Transportelement (6) im Bereich des Lagerungsabschnitts (18) mehrere kapazitive Sensoren (22) zur Bestimmung der Masse der in jedem Blisternapf (10) enthaltenen pharmazeutischen Produkte aufweist, dass jeder Sensor (22) eine erste Elektrode (26) und eine zweite Elektrode (28) aufweist und dass die erste Elektrode (26) und die zweite Elektrode (28) jedes Sensors (22) in einem Bodenbereich des Lagerungsabschnitts (18) des Transportelements (6) angeordnet sind.

2. Anlage nach Anspruch 1, **dadurch gekennzeichnet, dass** das Transportelement (6) als Wagen oder Schlitten ausgebildet ist.

3. Anlage nach Anspruch 1 oder 2, **dadurch gekennzeichnet, dass** das Transportelement (6) auf Schienen (4) verfahrbar ist.

4. Anlage nach einem der vorangehenden Ansprüche, **dadurch gekennzeichnet, dass** das Transportelement (6) und die Füllvorrichtungen (2) über eine zentrale Steuerungsvorrichtung betätigbar sind.

5. Anlage nach einem der vorangehenden Ansprüche, **dadurch gekennzeichnet, dass** im Bereich jeder Füllvorrichtung (2) eine Kamera (17) zur Überprüfung des Befüllvorgangs angeordnet ist.

6. Anlage nach einem der vorangehenden Ansprüche, **dadurch gekennzeichnet, dass** sie einen Spannungsgenerator für ein hochfrequentes elektrisches Wechselfeld aufweist, der die erste Elektrode (26) und die zweite Elektrode (28) eines jeden Sensors (22) jeweils kurzzeitig entgegengesetzt auflädt, sowie ein Strommessgerät zur Messung der durch die pharmazeutischen Produkte in jedem Blisternapf (10) induzierten Stromschwankungen.

7. Anlage nach Anspruch 6, **dadurch gekennzeichnet, dass** das elektrische Wechselfeld eine Frequenz von zwischen 500 kHz und 10 MHz, vorzugsweise zwischen 1 MHz und 2 MHz, aufweist.

8. Anlage nach Anspruch 7, **dadurch gekennzeichnet, dass** jeder Sensor (22) geeignet ist, die Daten eines Blisternapfes (10) innerhalb eines Zeitfensters von weniger als 100 ms, bevorzugt weniger als 50 ms, mehr bevorzugt weniger als 10 ms, aufzunehmen.

9. Anlage nach einem der vorangehenden Ansprüche, **dadurch gekennzeichnet, dass** die erste Elektrode (26) jedes Sensors (22) von einer Isolierung (30) und anschließend von der zweiten Elektrode (28) des jeweiligen Sensors (22) eingegrenzt ist.

10. Anlage nach Anspruch 9, **dadurch gekennzeichnet, dass** die erste Elektrode (26) einen runden Querschnitt aufweist und die zweite Elektrode (28) einen ringförmigen Querschnitt aufweist.

11. Anlage nach Anspruch 9, **dadurch gekennzeichnet, dass** die erste Elektrode (26) einen rechteckigen Querschnitt aufweist und die zweite Elektrode (28) einen Querschnitt in Form einer eckigen Umrandung aufweist.

## Claims

1. System for the monitored filling of solid pharmaceutical products in blister cavities (10) of a blister pack (8), comprising
a plurality of filling devices (2) for filling the blister cavities (10) with solid pharmaceutical products;
at least one transport element (6), which is movable between the filling devices (2) and has a storage portion (18) for storing the blister pack (8),
**characterised in that**
the transport element (6) has, in the region of the storage portion (18), a plurality of capacitive sensors (22) for determining the mass of the pharmaceutical products contained in each blister cavity (10), **in that** each sensor (22) has a first electrode (26) and a second electrode (28), and **in that** the first electrode (26) and the second electrode (28) of each sensor (22) are arranged in a base region of the storage portion (18) of the transport element (6).

2. System according to claim 1, **characterised in that** the transport element (6) is formed as a carriage or slide.

3. System according to either claim 1 or claim 2, **characterised in that** the transport element (6) is displaceable on rails (4).

4. System according to any one of the preceding claims, **characterised in that** the transport element (6) and the filling devices (2) can be actuated via a central control device.

5. System according to any one of the preceding claims, **characterised in that** a camera (17) is arranged in the region of each filling device (2) in order to monitor the filling process.

6. System according to any one of the preceding claims, **characterised in that** it has a voltage generator for a high frequency electrical alternating field, which charges the first electrode (26) and the second electrode (28) of each sensor (22) respectively oppositely for a short period, and a current measuring instrument for measuring the variations in current which are induced by the pharmaceutical products in each blister cavity (10).

7. System according to claim 6, **characterised in that** the electrical alternating field has a frequency of between 500 kHz and 10 MHz, preferably between 1 MHz and 2 MHz.

8. System according to claim 7, **characterised in that** each sensor (22) is capable of recording the data from a blister cavity (10) within a time frame of less than 100 ms, preferably less than 50 ms, more preferably less than 10 ms.

9. System according to any one of the preceding claims, **characterised in that** the first electrode (26) of each sensor (22) is limited by insulation (30) and subsequently by the second electrode (28) of the respective sensor (22).

10. System according to claim 9, **characterised in that** the first electrode (26) has a round cross-section and the second electrode (28) has an annular cross-section.

11. System according to claim 9, **characterised in that** the first electrode (26) has a rectangular cross-section and the second electrode (28) has a cross-section in the form of an angular border.

## Revendications

1. Installation destinée au remplissage contrôlé de produits pharmaceutiques solides dans des alvéoles de blister (10) d'un emballage blister (8), comprenant
une pluralité de dispositifs de remplissage (2) pour le remplissage des alvéoles de blister (10) par des produits pharmaceutiques solides ;
au moins un élément de transport (6), mobile entre les dispositifs de remplissage (2), qui présente une section d'entreposage (18) pour l'entreposage de l'emballage blister (8),
**caractérisée en ce que**
l'élément de transport (6) présente, dans la zone de la section d'entreposage (18), plusieurs capteurs capacitifs (22) pour la détermination de la masse des produits pharmaceutiques contenus dans chaque alvéole de blister (10), que chaque capteur (22) présente une première électrode (26) et une seconde électrode (28), et que la première électrode (26) et la seconde électrode (28) de chaque capteur (22) sont disposées dans une zone de fond de la section d'entreposage (18) de l'élément de transport (6).

2. Installation selon la revendication 1, **caractérisée en ce que** l'élément de transport (6) est réalisé sous forme de wagonnet ou de chariot.

3. Installation selon l'une des revendications 1 et 2, **caractérisée en ce que** l'élément de transport (6) est déplaçable sur des rails (4).

4. Installation selon l'une des revendications précédentes, **caractérisée en ce que** l'élément de transport (6) et les dispositifs de remplissage (2) sont actionnables par l'intermédiaire d'un dispositif de commande central.

5. Installation selon l'une des revendications précédentes, **caractérisée en ce qu'**une caméra (17) est disposée dans la zone de chaque dispositif de remplissage (2) pour le contrôle de l'opération de remplissage.

6. Installation selon l'une des revendications précédentes, **caractérisée en ce qu'**elle présente un générateur de tension pour un champ alternatif électrique à haute fréquence, lequel générateur charge instantanément en sens opposés la première électrode (26) et la seconde électrode (28) respectives de chaque capteur (22), ainsi qu'un ampèremètre pour la mesure des variations de courant, induites dans chaque alvéole de blister (10) par les produits pharmaceutiques.

7. Installation selon la revendication 6, **caractérisée en ce que** le champ alternatif électrique présente une fréquence comprise entre 500 kHz et 10 MHz, de préférence entre 1 MHz et 2 MHz.

8. Installation selon la revendication 7, **caractérisée en ce que** chaque capteur (22) est apte à enregistrer les données d'une alvéole de blister (10) à l'intérieur d'une fenêtre de temps de moins de 100 ms, de préférence de moins de 50 ms, plus préférentiellement de moins de 10 ms.

9. Installation selon l'une des revendications précédentes, **caractérisée en ce que** la première électrode (26) de chaque capteur (22) est circonscrite par une isolation (30), puis par la seconde électrode (28) de chaque capteur (22).

10. Installation selon la revendication 9, **caractérisée en ce que** la première électrode (26) présente une section transversale ronde et la seconde électrode (28) une section transversale annulaire.

11. Installation selon la revendication 9, **caractérisée en ce que** la première électrode (26) présente une section transversale rectangulaire et la seconde électrode (28) une section transversale en forme d'une bordure angulaire.
